# EUROPÄISCHE PATENTSCHRIFT

(11) **EP 0 471 039 B1**
(45) Veröffentlichungstag und Bekanntmachung des Hinweises auf die Patenterteilung: **06.07.1994**
(21) Anmeldenummer: 90914169.9
(22) Anmeldetag: 12.09.1990
(51) Int. Cl.: B60H 1/00

(54) **KLIMAANLAGE FÜR KRAFTFAHRZEUGE, INSBESONDERE OMNIBUSSE**
AIR-CONDITIONING UNIT FOR MOTOR VEHICLES, IN PARTICULAR OMNIBUSES
CLIMATISATION POUR VEHICULES A MOTEUR, NOTAMMENT AUTOBUS

(30) Priorität: 12.09.1989 DE 3930429
(43) Veröffentlichungstag der Anmeldung: 19.02.1992
(73) Patentinhaber: WEBASTO KLIMATECHNIK GmbH, D-82131 Stockdorf (DE)
(72) Erfinder: MAYER, Helmut, D-8027 Neuried (DE)
(74) Vertreter: Dorner, Jörg, Dr.-Ing.
(86) Internationale Anmeldenummer: EP9001538
(87) Internationale Veröffentlichungsnummer: WO9104164

(56) Entgegenhaltungen:
- EP-A- 241 653
- EP-A- 327 374
- DE-A- 3 224 895
- US-A- 3 862 549
- US-A- 4 727 728

## Beschreibung

Die Erfindung betrifft eine Klimaanlage für Kraftfahrzeuge, insbesondere Omnibusse, mit den Merkmalen des Oberbegriffes von Anspruch 1. Klimaanlagen dieser Art sind in mehrerlei Ausführunasformen bekannt und beispielsweise in der deutschen Patentschrift DE-A-32 24 895 beschrieben.

Bei Klimaanlagen der zuletzt erwähnten Konstruktion liegt die Verflüssigereinheit in Fahrtrichtung vor der Verdampfereinheit. Die Rohre des Verflüssigerwärmetauschers verlaufen quer zur Fahrtrichtung und die Stirnfläche des Verflüssigerwärmetauschers ist gegenüber einer Horizontalebene nach vorwärts geneigt. Eine dem Verflüssigerwärmetauscher zugeordnete Gebläsereihe saugt von einer stirnseitigen Frischlufteintrittsöffnung her die Luft durch den Wärmetauscher der Verflüssigereinheit an und gibt sie dann nach oben ab. In Fahrtrichtung hinter der Verflüssigereinheit der bekannten Klimaanlage arbeitet ohne eine Verbindung der jeweiligen Luftströmungswege die Verdampfereinheit derart, daß die aus dem Fahrgastraum über die Umluftöffnung entnommene Umluft quer zur Fahrtrichtung durch die sich im wesentlichen längs zur Fahrtrichtung erstreckenden Rohrregister der Wärmetauscher der Verdampfereinheit gefördert und über Gebläse in den Fahrgastraum zurückgedrückt wird.

Bei bekannten Klimaanlagen der zuvor betrachteten Art wird mitunter eine Abhängigkeit von der Konstruktion und der Funktionsfähigkeit der im betreffenden Kraftfahrzeug vorgesehenen Belüftung und Entlüftung des Fahrgastraumes für den Betrieb der Verdampfereinheit als Nachteil empfunden, da diese, insbesondere wenn in Fahrtrichtung hinter der Verflüssigereinheit auf dem Kraftfahrzeugdach bzw. Omnibusdach angeordnet, nicht ohne weiteres von Frischluftzuführungskanälen erreicht werden kann, ohne Bauhöhe und Querschnitt der Klimaanlage zu vergrößern.

Aufgabe der Erfindung ist es daher, eine Klimaanlage für Kraftfahrzeuge, insbesondere Omnibusse, zur Aufdachmontage in Flachbauweise so auszugestalten, daß bei minimaler Bauhöhe und ohne Verbreiterung oder wesentliche Umrißveränderungen eine klimatechnische Behandlung der in den Fahrgastraum einzuführenden Frischluft unabhängig von Be- und Entlüftungsanlagen oder Lufteintrittsöffnungen und Entlüftungsöffnungen des Kraftfahrzeugs selbst vorgenommen werden kann.

Diese Aufgabe wird erfindungsgemäß durch die im kennzeichnenden Teil von Anspruch 1 angegebenen Merkmale gelöst.

Es zeigt sich, daß auch bei außerordentlich geringer Bauhöhe der Klimaanlage, beispielsweise in der Größenordnung von etwa 16 cm, eine stirnseitige Lufteintrittsöffnung des den Verdampfer umschließenden Gehäuseteiles auch unter Berücksichtigung einer minimalen Bauhöhe dazu ausreicht, die gewünschte Menge von Frischluft zuzuführen und gegebenenfalls in der Verdampfereinheit zu kühlen, zu heizen oder dergleichen, und danach in den Fahrgastraum zu fördern, von wo aus die Luft über die Umluftöffnung des Kraftfahrzeugdaches in den über ihr gelegenen Gehäuseinnenbereich der Verdampfereinheit und die geöffnete Abluftklappe in der rückwärtigen Abteilungswand des Gehäuseinnenbereiches in die Verflüssigereinheit gelangt und von dort zur freien Umgebung hin abgeführt wird. Auf diese Weise wird der hier angegebenen Klimaanlage eine vollständige Unabhängigkeit von kraftfahrzeugeigenen Be- und Entlüftungseinrichtungen hinsichtlich der Frischluftzufuhr und der Entlüftung erreicht, was bedeuten kann, daß sich bei Neukonstruktionen von mit vorliegend angegebenen Klimaanlagen ausgerüsteten Kraftfahrzeugen, insbesondere Omnibussen, eine beachtliche Vereinfachung und damit Kosteneinsparung erreichen läßt.

Wird die über die zuvor erwähnte Abluftklappe abführbare, gekühlte Raumluft in den Luftführungsweg des in Fahrtrichtung hinter der Verdampfereinheit auf dem Fahrzeugdach montierten Verflüssigers gemäß einem sehr vorteilhaften Merkmal der vorliegend angegebenen Konstruktion eingeführt, so wird eine Verbesserung des gesamten Wirkungsgrades der Anlage erzielt.

Auf eine Anzahl bei einer Klimaanlage der vorliegenden Art möglichen Betriebsweisen, die mit bestimmten Vorteilen verbunden sind, wird nachfolgend bei der Beschreibung eines bevorzugten Ausführungsbeispieles eingegangen. Es sei hier darauf hingewiesen, daß vorteilhafte Ausgestaltungen und Weiterbildungen in den dem Anspruch 1 nachgeordneten Patentansprüchen gekennzeichnet sind, wobei der Wortlaut dieser Ansprüche hier zur Vereinfachung nicht wiederholt, jedoch ausdrücklich zum Bestandteil des Inhaltes der Beschreibung gemacht wird.

Nachfolgend werden Einzelheiten einer Klimaanlage nach dem vorliegend angegebenen Prinzip anhand eines Ausführungsbeispieles unter Bezugnahme auf die Zeichnung näher erläutert. Es zeigen:

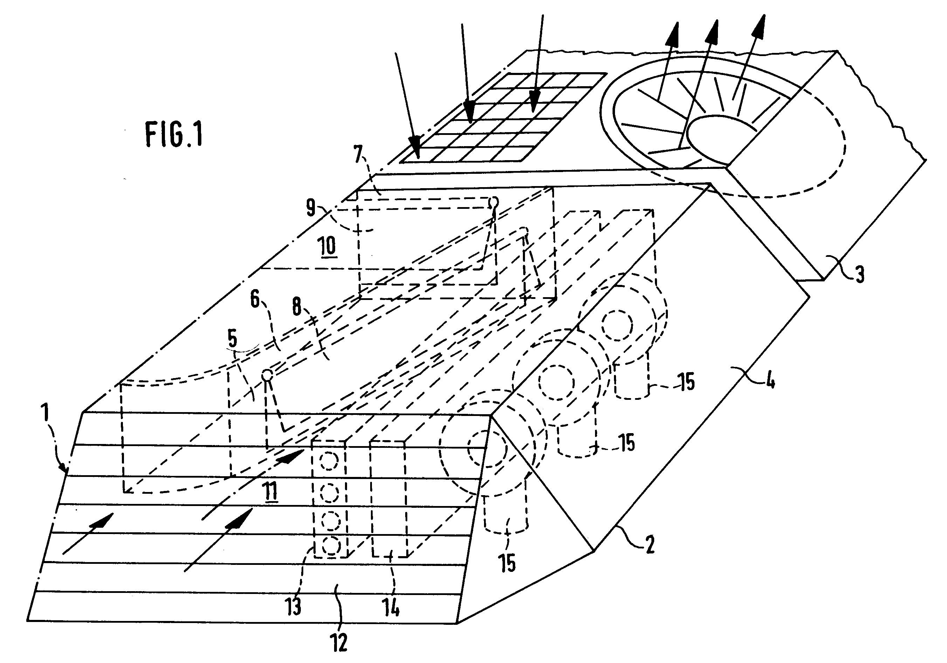

- Fig. 1: eine ausschnittsweise perspektivische Darstellung einer Klimaanlage für Kraftfahrzeuge zur Aufdachmontage, wobei der linke Teil der Anlage längs einer vertikalen Mittellängsebene abgeschnitten und der hintere Teil der Verflüssigereinheit abgebrochen gezeigt wird,
- Fig. 2: eine schematische Darstellung der Klimaanlage nach Figur 1 in Aufsicht und in verkleinertem Maßstab nach Abnahme der oberen Gehäusewand der Verdampfereinheit und
- Fig. 3: einen Schnitt durch die Verflüssigereinheit entsprechend der in Figur 2 angedeuteten Schnittlinie III-III.

Es sei vorausgeschickt, daß in der Zeichnung Rohrleitungen, Ventile, Filter und dergleichen der Kühlanlage zur Vereinfachung der Darstellung weggelassen sind, nachdem diese Details dem Fachmann in vielerlei Ausführungsformen bekannt sind, so daß hier nur die Verdampfereinheit und die Verflüssigereinheit als die wichtigsten Teile der Klimaanlage im einzelnen gezeigt sind. Weiter ist in der Zeichnung auf die Wiedergabe von Stelltrieben, insbesondere pneumatischen oder elektrischen Stelltrieben sowie auf die Wiedergabe elektrischer Leitungsverbindungen, da ebenfalls dem Fachmann ansich bekannt, verzichtet. Zweckmäßig ist jedoch die Stellung der gezeigten und beschriebenen Klappen und Jalousien durch geeignete Stelltriebe kontinuierlich oder feinstufig im gesamten Stellbereich einstellbar.

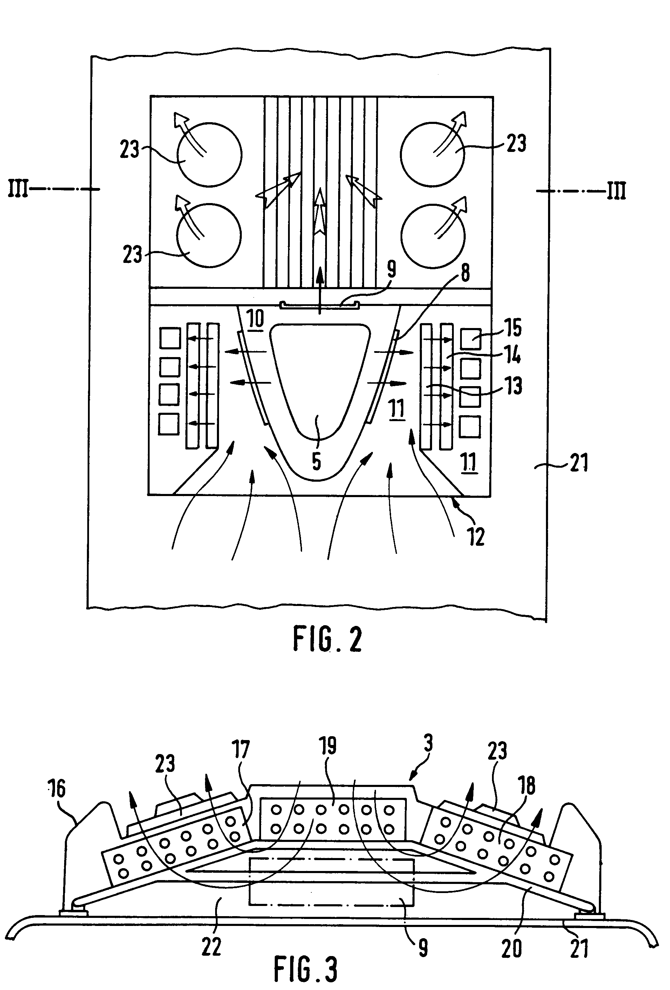

Zu einer vertikalen Mittellängsebene des Kraftfahrzeuges und der Klimaanlage symmetrisch ausgebildet enthält die Klimaanlage eine Verdampfereinheit 2 und eine Verflüssigereinheit 3. Die Verdampfereinheit liegt in Fahrtrichtung vor der Verflüssigereinheit und ist insgesamt in einem etwa flachquaderförmigen Gehäuseteil 4 untergebracht, wobei die Gehäuseseitenwände abweichend von der gezeigten abgeschrägten Form auch in anderer Weise ausgestaltet sein können und beispielsweise dem in Figur 3 an einem Querschnitt durch die Verflüssigereinheit gezeigten Umrißverlauf folgen können. Jedenfalls sind die Querschnitte der Verdampfereinheit und der Verflüssigereinheit senkrecht zur Fahrtrichtung so gewählt, daß die beiden Einheiten in Fahrtrichtung strömungsgünstig miteinander fluchten.

Die Verdampfereinheit 2 ist in solcher Stellung auf dem Dach des Kraftfahrzeugs montiert, daß eine im Boden des Gehäuseteiles 4 befindliche Umluftöffnung 5 im wesentlichen dreieckiger oder trapezförmiger Gestalt (siehe Fig. 2) sich mit einer Umluftöffnung im Dach des betreffenden Kraftfahrzeugs deckt. Die Umluftöffnung 5 ist von inneren Abteilungswänden 6 und 7 des Gehäuseteiles 4 der Verdampfereinheit 2 umstellt, derart, daß innerhalb dieses Gehäuseteils ein oberhalb der Umluftöffnung 5 gelegener Gehäuseinnenbereich gebildet ist. Die in der dargestellten Weise schräg zur Fahrtrichtung verlaufenden seitlichen Abteilungswände 6 sind mit Umluftklappen 8 versehen, die am oberen Rand von langgestreckten Öffnungen der seitlichen Abteilungswände 6 angelenkt und mittels pneumatischer Stelltriebe zwischen einer Stellung des hermetischen Abschlusses der betreffenden Öffnung und einer maximalen Öffnungsstellung stufenlos oder feinstufig einstellbar sind.

Die hintere Abteilungswand 7, welche Bestandteil der hinteren Abschlußwand des Gehäuseteiles 4 sein kann, ist mit einer Abluftklappe 9 versehen, die zum Verschluß oder zur Freigabe einer in der hinteren Abteilungswand 7 vorgesehenen Öffnung dient und an deren oberem Öffnungsrand angelenkt ist. Auch die Abluftklappe 9 ist mittels eines pneumatischen Stelltriebes zwischen einer Stellung des hermetischen Abschlusses genannter Öffnung und einer Stellung maximaler Freigabe feinstufig oder kontinuierlich einstellbar.

Aus Figur 2 ist erkennbar, daß der Innenraum des Gehäuseteiles 4 der Verdampfereinheit 2 durch die inneren Abteilungswände 6 und 7 in zwei Bereiche unterteilt wird, nämlich zum einen in den bereits erwähnten, in der Zeichnung mit 10 bezeichneten Gehäuseinnenbereich oberhalb der Umluftöffnung 5 und den weiteren Gehäusebereich 11, der zwischen den inneren Abteilungswänden 6 und 7 und den äußeren Begrenzungswänden des Gehäuseteiles 4 gelegen ist.

An der Stirnseite des Gehäuseteiles 4 der Verdampfereinheit 2 ist eine Frischlufteintrittsöffnung 12 vorgesehen, die mittels einer Jalousie öffenbar oder verschließbar ist. Die Lamellen der Jalousie erstrecken sich im wesentlichen über die gesamte Breite des Gehäuseteiles 4 und sind mittels eines pneumatischen Stelltriebs zwischen der Schließstellung und der Öffnungsstellung stufenlos oder feinstufig einstellbar.

In dem weiteren Gehäusebereich 11 befinden sich im wesentlichen in Fahrtrichtung orientiert, die Gestalt hochkant stehender Balken aufweisende Rohrregister 13 als Verdampferwärmetauscher sowie parallel zu diesen angeordnete, ihnen in Luftströmungsrichtung nachgeschaltete Heizregister 14 ähnlicher äußerer Gestalt. Über die Register 13 und 14 kann mittels Gebläsen 15 Luft aus dem weiteren Gehäusebereich 11 über fluchtende Gehäuse- und Dachöffnungen in den Fahrgastraum gefördert werden. Luftströmungskurzschlüsse zwischen der Frischlufteintrittsöffnung 12 und den Eintrittsöffnungen der Gebläse 15 sind durch geeignete Einbauten im weiteren Gehäuseinnenbereich 11 verhindert.

Die zwischen den Rohrregistern 13 und den inneren Abteilungswänden 6 gelegenen Kammern des weiteren Gehäuseinnenbereiches 11 verjüngen sich in Luftströmungsrichtung bzw. entgegen der Fahrtrichtung entsprechend dem Geringerwerden des durch die Gebläse 15 jeweils abzuführenden Luftsvolumens.

Das Gehäuseteil 16 der Verflüssigereinheit 3 hat die aus Figur 3 erkennbare Querschnittsgestalt und überspannt drei flache, sich parallel zur Fahrtrichtung erstreckende Rohrregister 17, 18 und 19 als Verflüssiger-Wärmetauscher, welche sich parallel zur Fahrtrichtung erstrecken und auf einem flach trapezförmigen Aluminiumtragrahmen 20, der sich auf dem Omnibusdach 21 abstützt, montiert sind. Mit Bezug auf den in Figur 3 gezeigten Querschnitt liegt somit der mittlere Verflüssiger-Wärmetauscher 19 mit Abstand oberhalb des Omnibusdaches 21 parallel zu diesem, während die seitlichen Verflüssiger-Wärmetauscher 17 und 18 schräggestellt sind, derart, daß unterhalb der Verflüssiger-Wärmetauscher 17, 18 und 19 eine Luftkammer 22 gebildet ist, deren Gestalt diejenige eines im Querschnitt flach trapezförmigen Prismas ist, das sich von der vorderen Abschlußwand des Gehäuses der Verflüssigereinheit 3 bis zur hinteren Abschlußwand erstreckt.

Mit dem Gehäuseteil 16 zusammengebaute, flachscheibenförmige Verflüssigergebläse saugen Umgebungsluft über ein Lufteintrittsgitter des Gehäuseteiles 16 oberhalb des VerflüssigerWärmetauschers 19 an, so daß die Umgebungsluft in die Kammer 22 eintritt und dann über die Verflüssiger-Wärmetauscher 17 und 18 sowie die Gebläse 23 wieder zur Umgebung abgegeben wird. Die Anordnung der Verflüssiger-Verdampfer mit Verlauf der Rohrregister parallel zur Fahrtrichtung sowie auf dem Aluminiumtragrahmen 20 in der gezeigten trapezförmigen Konfiguration ergibt eine günstige Luftführung, eine gute Festigkeit und eine niedrige Bauhöhe. Von besonderer Bedeutung aber ist es, daß die Luftkammer 22 der Verflüssigereinheit 3 über die mit der Klappe 9 der Verdampfereinheit verschließbare Öffnung in der Abteilungwand 7 bzw. der hinteren Abschlußwand des Gehäuseteiles 4 in Verbindung gesetzt werden kann, derart, daß ein Abluftweg zwischen dem Gehäuseinnenbereich 10 und den Luftströmungskanälen der Verflüssigereinheit verfügbar wird.

Aufgrund dieser Ausgestaltung und relativen Anordnung der Verdampfereinheit und der Verflüssigereinheit ergeben sich vorteilhafte Betriebsmöglichkeiten der vorliegend angegebenen Klimaanlage, worauf nachfolgend näher eingegangen wird.
A. Sind die Klappen 8 und 9 in der Verdampfereinheit 2 hermetisch abgeschlossen, so kann aufgrund des Staudrucks während der Fahrt über geöffnete oder teilgeöffnete Jalousielamellen der Lufteintrittsöffnung 12 in den weiteren Gehäusebereich 11 einströmende Frischluft nach Kühlung bzw. Beheizung in den Registern 13 bzw. 14 auch bei stillstehenden Gebläsen 15 in den Fahrgastraum gefördert werden. Diese Luft tritt dann über ein Entlüftungssystem des Fahrzeugs wieder ins Freie aus, wenn die in der hinteren Abteilungswand des Gehäuseinnenbereiches 10 vorgesehene Klappe 9 geschlossen ist. In diesem Falle wird also die vorteilhafte Eigenschaft einer Unabhängigkeit der vorliegenden Klimaanlage von Entlüftungsöffnungen des Kraftfahrzeuges noch nicht ausgenützt. Die Verdampfergebläse 15 sind gemäß einem sehr vorteilhaften Merkmal der hier angegebenen Konstruktion stufenlos beispielsweise zwischen 50 % und 100 % Leistung steuerbar, so daß ihre Leistungsaufnahme auf den jeweiligen Betriebszustand bzw. die jeweiligen Umgebungsbedingungen in energiesparender Weise abgestimmt werden kann.
B. Sind bei geschlossenen Klappen 8 und 9 die Verdampfergebläse 15 eingeschaltet, so unterstützt der Staudruck der über die Lufteintrittsöffnung 12 in den Gehäusebereich 11 einströmenden Luft die Förderwirkung der Gebläse 15.
C. Wird nun die Klappe 9 bei geöffneten Jalousien der Lufteintrittsöffnung 12 vollständig geöffnet, so ist das System nicht nur von fahrzeugeigenen Lufteintrittsöffnungen sondern auch von fahrzeugeigenen Entlüftungsöffnungen unabhängig geworden, da sämtliche , über die Lufteintrittsöffnung 12 zugeführte Frischluft, gegebenenfalls nach klimatechnischer Behandlung in den Rohrregistern der Verdampfereinheit und nach Einführung über die Gebläse 15 in den Fahrgastraum aus diesem wieder über die Umluftöffnung 5 und die geöffnete Klappe 9 abgeführt wird und über den Innenraum der Verflüssigereinheit mittels der Gebläse 23 zur freien Umgebung hin abgesaugt wird. Für diesen Betriebsfall bleiben die Klappen 8 der seitlichen Abteilungswände vollständig dicht geschlossen, um einen Kurzschluß zwischen der Lufteintrittsöffnung 12 und dem Luftströmungsweg über die Klappe 9 zu den Gebläsen 23 hin zu verhindern.
   Es sei angemerkt, daß im vorliegend betrachteten Betriebsfall die Gebläse 15 dann abgeschaltet werden können, wenn der Staudruck an der Lufteintrittsöffnung 12 etwa bei ausreichender Fahrgeschwindigkeit für eine Frischluftzuförderung ausreicht und daß der Bedarf an, gegebenenfalls klimatechnisch behandelter, Frischluft im Fahrgastraum während der Fahrt oder auch bei Fahrzeugstillstand allein dadurch bestritten werden kann, daß bei stillstehenden Gebläsen 15, gescchlossenen Klappen 8 und geöffneter Klappe 9 mindestens eines der Gebläse 23 die Frischluft über die Lufteintrittsöffnung 12 durch den den Fahrgastraum enthaltenden Strömungsweg saugt.
D. Sind die Jalousien der Lufteintrittsöffnung 12 vollständig geschlossen und sind die Klappen 8 in den Abteilungswänden 6 vollständig geöffnet, während die Klappe 9 in der Abteilungswandung 7 vollständig geschlossen ist, so kann die Verdampfereinheit 4 im normalen Umluftbetrieb arbeiten, bei dem über die Umluftöffnung 5 eintretende Luft aus dem Fahrgastraum mittels der Rohrregister 13 bzw. 14 nachgekühlt bzw. nachgeheizt wird und dann durch die Gebläse 15 wieder in den Fahrgastraum gedrückt wird.
E. Bei dem zuletzt betrachteten Betrieb läßt sich die im Umluftbetrieb umgewälzte Luft bei beliebig teilgeöffneter Lufteintrittsöffnung 12 mit Frischluft ergänzen, wobei der ergänzte Teil als Abluft über das Entlüftungssystem des Fahrzeugs in die freie Umgebung austritt, wenn in entsprechender Weise, wie bei den zuvor beschriebenen Betriebsfällen A und B ausgeführt, auf die vorteilhafte Eigenschaft der vorliegenden Klimaanlage kein Wert gelegt wird, vom Entlüftungssystem des Kraftfahrzeugs selbst unabhängig zu sein und die Klappe 9 demgemäß geschlossen gehalten wird.
F. Gegenüber dem zuletzt beschriebenen Betriebsfall wird eine Unabhängigkeit von dem Entlüftungssystem des Fahrzeugs dadurch erreicht, daß die Abluftklappe teilweise oder vollständig geöffnet wird, derart, daß die Abzweigung des ergänzten Umluftteiles zur freien Umgebung hin unabhängig von dem Entlüftungssystem des Fahrzeugs geschehen kann.
   Bei dieser zuletzt betrachteten Betriebsweise in eingeschränktem Maße, insbesondere aber bei der Betriebsweise C wird nicht nur eine Unabhängigkeit von dem Entlüftungssystem des Kraftfahrzeugs erreicht, sondern es wird der Wirkungsgrad der Verflüssigereinheit dann verbessert, wenn durch die Abluftklappe 9 aus dem Gehäuseinnenbereich 10 der Verdampfereinheit gekühlte Raumluft in den Verflüssiger eingeführt wird.
G. Schließlich sei auch noch der Betriebsfall erwähnt, in dem die Jalousien der Frischlufteintrittsöffnung 12 und die Umluftklappen 8 vollständig geschlossen sind und bei geöffneter Abluftklappe 9 die Gebläse 23 der Verflüssigereinheit den Fahrgastraum über die Umluftöffnung 5 auf einen Unterdruck bringen, derart, daß Umgebungsluft über kleine Spalte und Öffnungen des Fahrgastraumes in diesen eintritt und eine Kühlung des Fahrgastraumes durch eine Frischluftzufuhr aus der Umgebung auf diese Weise erreicht wird.

Die Verflüssigergebläse 23 können ebenso wie die Verdampfergebläse 15 in einem weiteren Bereich regelbar ausgebildet sein, so daß jederzeit eine geregelte Entlüftung des Fahrgastraumes über die Umluftöffnung 5 bei geöffneter oder teilgeöffneter Klappe 9 möglich ist.

Ist die gesamte Klimaanlage nicht in Betrieb, so sind sämtliche Klappen hermetisch geschlossen, so daß Zuglufterscheinungen durch die Umluftöffnung 5 nicht auftreten.

Abschließend sei noch darauf hingewiesen, daß die hier angegebene Konstruktion der Verflüssigereinheit eine von der hier angegebenen Konstruktion der Verdampfereinheit unabhängige Erfindung darstellt.

## Patentansprüche

1. Klimaanlage für Kraftfahrzeuge, insbesondere Omnibusse, zur Aufdachmontage in Flachbauweise, mit einer in einem Gehäuseteil (16) befindlichen Verflüssigereinheit (3) und einer in einem weiteren Gehäuseteil (4) befindlichen Verdampfereinheit (2), wobei eine dieser beiden Einheiten in Fahrtrichtung im wesentlichen fluchtend hinter der jeweils anderen Einheit der beiden Einheiten montiert ist und die Verdampfereinheit (2) einen Gehäuseinnenbereich aufweist, in den eine Umluftöffnung (5) aus dem Fahrgastraum einmündet, über die Luft aus dem Fahrgastraum über Verdampferregister (13) und gegebenenfalls Heizregister (14), (die sich im wesentlichen parallel zur Fahrtrichtung erstrecken,) sowie über eine Gebläseanordnung (15) in den Fahrgastraum zurückförderbar ist, dadurch gekennzeichnet, daß die Verdampfereinheit (2) in Fahrtrichtung der Verflüssigereinheit (3) vorgelagert ist und eine verschließbare Frischlufteintrittsöffnung (12) an der Stirnseite ihres Gehäuseteiles (4) aufweist und daß der Gehäuseinnenbereich um die Umluftöffnung (5) herum von Abteilungswänden (6, 7) des Gehäuseteiles (4) umstellt ist, von denen seitliche Abteilungswände (6) öffenbare und verschließbare Umluftklappen (8) enthalten, und eine hintere Innenwand (7) des Gehäuseinnenbereiches (10) eine öffenbare und verschließbare Abluftklappe (9) enthält, über die Luft aus dem Fahrgastraum bzw. aus dem Gehäuseinnenbereich (10) in den Lüftführungsweg der Verflüssigereinheit (3) abführbar ist.

2. Klimaanlage nach Anspruch 1, dadurch gekennzeichnet, daß die Abteilungswände (6, 7) des Gehäuseteiles (4) der Verdampfereinheit (2) einen über der Umluftöffnung (5) gelegenen, sich mit Bezug auf eine Aussicht in Fahrtrichtung verjüngenden Gehäuseraum (10) umgrenzen.

3. Klimaanlage nach Anspruch 2, dadurch gekennzeichnet, daß Verschlußorgane der Frischlufteintrittsöffnung (12) und/oder die Umluftklappen (8) und/oder die Abluftklappe (9) mittels insbesondere pneumatisch, betätigbar und zwischen einer Stellung hermetischen Abschlusses einerseits und maximaler Öffnungsstellung andererseits feinstufig oder kontinuierlich einstellbar sind.

4. Klimaanlage für Kraftfahrzeuge, vornehmlich Omnibusse, zur Aufdachmontage in Flachbauweise, nach einem der Ansprüche 1 bis 3, dadurch gekennzeichnet, daß ihre Verflüssigereinheit (3) drei flache, sich parallel zur Fahrtrichtung erstreckende Rohrregister (17, 18, 19) als Verflüssiger-Wärmetauscher aufweist, dessen mittleres (19) im Abstand über dem Kraftfahrzeugdach und unmittelbar unter Lufteintrittsöffnungen des Gehäuseteiles (16) der Verflüssigereinheit (3) gehalten ist, während die beiden seitlichen Rohrregister (17, 18), mit Bezug auf einen Querschnitt durch die Verflüssigereinheit, derart schräggestellt sind, daß die Anordnung der VerflüssigerWärmetauscher oberhalb des Kraftfahrzeugdaches eine im Querschnitt flach trapezförmige Luftkammer (22) umgrenzen, in welche Umgebungsluft nach Durchströmen des mittleren Rohrregisters (19) eintritt, um dann mittels oberhalb der seitlichen Rohrregister (17, 18) angeordneter Verflüssigergebläse (23) wieder in die freie Umgebung gesaugt zu werden.

5. Klimaanlage nach Anspruch 4, dadurch gekennzeichnet, daß die die Verflüssiger-Wärmetauscher bildenden Rohrregister (17, 18, 19) auf einem im Querschnitt flach trapezförmig ausgebildeten Metalltragrahmen, insbesondere Aluminiumtragrahmen (20) montiert sind.

6. Klimaanlage nach Anspruch 4 oder 5, dadurch gekennzeichnet, daß die Verflüssigergebläse (23) in die nach oben weisende Wand des die Verflüssigereinheit umschließenden Gehäuseteiles (16) eingebaut sind.

7. Klimaanlage nach einem der Ansprüche 1 bis 6, dadurch gekennzeichnet, daß die Verdampfergebläse (15) und/oder die Verflüssigergebläse (23) eine in einem bestimmten Regelbereich feinstufig oder kontinuierlich regelbare Leistung haben.

## Claims

1. Air conditioning system for motor-vehicles, particularly busses, of a flat construction for installation on the roof, comprising a condenser unit (3) accommodated in a housing part (16) and an evaporator unit (2) accommodated in another housing part (4), wherein one of these two units in the direction of travel is mounted substantially in line behind the other of the two units, and the evaporator unit (2) has an inside housing part in which a circulating air opening (5) from the passenger compartment opens out, through which the air from the passenger compartment via evaporator registers (13) and/or heating registers (14) (which extend substantially parallel to the direction of travel), as well as via a blower arrangement (15) can be fed back into the passenger compartment, characterized in that the evaporator unit (2) lies in the direction of travel in front of the condenser unit (3), and in the front face of its housing part (4) has a fresh air inlet opening (12) that can be closed off, and that the inside part of the housing around the circulating air opening (5) is surrounded by inside partitions (6,7) of the housing part, of which the lateral partitions (6) comprise circulating air flaps (8) that can be opened and closed, and a rear partition (7) of the inside part (10) of the housing has a waste air flap (9) that can be opened and closed, via which the air from the passenger compartment or the inside part (10) of the housing can be discharged into the air flow path of the condenser unit.

2. Air conditioning system according to claim 1, characterized in that the partitions (6,7) of the housing part (4) of the evaporator unit (2) delimit a housing part (10) positioned above the circulating air opening (5) which tapers down when looking in the direction of travel.

3. Air conditioning system according to claim 2, characterized in that the closing elements of the fresh air inlet opening (12) and/or the circulating air flaps (8) and/or the waste air flap (9) can be actuated by means of regulating mechanisms and can be set infinitely variable or in fine steps between a hermetically closed position and a maximum opening position.

4. Air conditioning system for motor vehicles particular busses, of a flat construction for installation on the roof, according to any one of the claims 1 to 3, characterized in that its condenser unit (3) has three flat tubular registers, (17,18,19) as condensor heat exchangers extending parallel to the direction of travel, the centre one (19) of which is kept at a distance above the motor vehicle roof and dirctly under air inlet openings of the housing part (16) of the condenser unit (3), whereas the two lateral tubular registers (17,18) are positioned at a slant in relation to a cross-section through the condenser unit, in such a way that the arrangement of the condenser heat exchangers delimits above the roof of the vehicle an air chamber (22) with a flat trapezoidal cross-section, into which ambient air enters after flowing through the centre tubular register (19), to then be drwan off again into atmosphere by means of condenser blowers (23) positioned above the lateral tubular registers (17,18).

5. Air conditioning system according to claim 4, characterized in that the tubular registers (17,18,19), forming the condensor heat exchangers are mounted on a metal support frame particularly an aluminium support frame (20), with a flat trapezoidal cross-section.

6. Air conditioning system according to claim 4 or 5, characterized in that the condenser blowers (23) are mounted in the upwardly directed wall of the housing part (16) which encloses the condenser unit.

7. Air conditioning system according to any one of the claims 1 to 6, characterized in that the evaporator blowers (15) and/or the condenser blowers (23) have a capacity which can be regulated infinitely variably or in fine steps within a specific regulating range.

## Revendications

1. Installation de climatisation pour véhicule automobile, notamment autocar ou autobus, destinée à être montée sur le toit, présentant une construction plate, avec une partie de boîtier (16) contenant un condenseur (3) et un évaporateur (2) placé dans une autre partie du boîtier, l'un de ces deux éléments (évaporateur ou condenseur) étant monté dans l'alignement de l'autre suivant la direction de déplacement du véhicule et l'évaporateur (2) comporte une zone intérieure de boîtier dans laquelle débouche une ouverture de circulation d'air (5) sortant de l'habitacle du véhicule, par laquelle de l'air peut être fourni de l'habitacle à travers des registres d'évaporateurs (13) et le cas échéant des registres de chauffage (14) (qui sont essentiellement parallèles à la direction de déplacement) ainsi que par une machine soufflante (15) pour être renvoyé dans l'habitacle, caractérisée en ce que l'évaporateur (2) est en amont du condenseur (3) selon le sens de déplacement du véhicule et une ouverture d'entrée d'air frais (12) susceptible d'être fermée est prévue sur la face frontale de sa partie de boîtier (4), la zone intérieure du boîtier autour de l'ouverture de circulation d'air (5) étant entourée par des cloisons (6, 7) de la partie de boîtier (4) dont les parois latérales (6) comportent des volets (8) susceptibles d'être ouverts ou fermés et une cloison arrière (7) de la zone intérieure (10) du boîtier comporte un volet de sortie d'air (9) susceptible d'être ouvert ou fermé, qui permet d'évacuer l'air de l'habitacle ou de la zone intérieure (10) du boîtier dans la chemin de circulation d'air du condenseur (3).

2. Installation de climatisation selon la revendication 1, caractérisée en ce que les cloisons (6, 7) de la partie de boîtier (4) de l'évaporateur (2) délimitent un volume (10) de boîtier situé au-dessus de l'ouverture de circulation d'air (5) et qui va en diminuant dans la direction de déplacement du véhicule.

3. Installation de climatisation selon la revendication 2, caractérisée en ce que les organes de fermeture de l'ouverture d'entrée d'air (12) et/ou les volets de circulation d'air (8) et/ou le volet de sortie d'air (9) sont commandés par des actionneurs, notamment pneumatiques, et peuvent être réglés entre, d'une part, une position de fermeture hermétique, et, d'autre part, une position d'ouverture maximale, suivant un réglage continu ou à petits pas.

4. Installation de climatisation pour véhicule automobile, notamment autobus ou autocar, destinée à être montée sur le toit, avec une construction à plat, notamment selon l'une des revendications 1 à 3, caractérisée en ce que le condenseur (3) comporte trois registres de tubes (17, 18, 19), plats, s'étendant parallèlement à la direction de déplacement et constituant l'échangeur de chaleur du condenseur, le registre central (19) étant situé à une certaine distance au-dessus du toit du véhicule en étant directement maintenu sous les ouvertures d'entrée d'air de la partie de boîtier (16) du condenseur (3) alors que les deux registres de tubes (17, 18) latéraux sont disposée en biais par rapport à la section du condenseur, le montage de l'échangeur de chaleur du condenseur au-dessus du toit du véhicule délimitant une chambre d'air (22) de section trapézoïdale, écrasée, dans laquelle pénètre l'air ambiant à travers les ouvertures de passage du registre de tubes (19) central pour être aspiré à l'extérieur par des machines soufflantes (23) de condenseur prévues au-dessus des registres de tubes (17, 18) latéraux.

5. Installation de climatisation selon la revendication 4, caractérisée en ce que les registres de tubes (17, 18, 19) formant l'échangeur de chaleur/condenseur sont montés sur un châssis de support métallique, dont la section à la forme d'un trapèze écrasé, notamment d'un châssis de support en aluminium (20).

6. Installation de climatisation selon les revendications 4 ou 5, caractérisée en ce que les machines soufflantes (23) du condenseur sont prévues dans la partie de boîtier (16) entourée par la cloison tournée vers le haut de l'évaporateur.

7. Installation de climatisation selon l'une des revendications 1 à 6, caractérisée en ce que les machines soufflantes (15) de l'évaporateur et/ou les machines soufflantes (23) du condenseur ont une puissance réglable dans une plage de réglage déterminée par un réglage continu ou à petits pas.
